# EUROPEAN PATENT SPECIFICATION

(11) **EP 4 560 744 B1**
(45) Date of publication and mention of the grant of the patent: **31.12.2025**
(21) Application number: 23211860.4
(22) Date of filing: 23.11.2023
(51) Int. Cl.: H01M 8/0432, H01M 8/04029, H01M 8/04746

(54) **A COOLING SYSTEM WITH A SINGLE COOLING CIRCUIT FOR TWO FUEL CELL SYSTEMS AND A HEIGHT-ADJUSTABLE PRESSURE EQUALIZATION DEVICE AND A METHOD OF ADJUSTING A COOLANT PRESSURE**
KÜHLSYSTEM MIT EINEM EINZIGEN KÜHLKREISLAUF FÜR ZWEI BRENNSTOFFZELLENSYSTEME UND HÖHENVERSTELLBARE DRUCKAUSGLEICHSVORRICHTUNG SOWIE VERFAHREN ZUR EINSTELLUNG EINES KÜHLMITTELDRUCKS
SYSTÈME DE REFROIDISSEMENT AVEC UN SEUL CIRCUIT DE REFROIDISSEMENT POUR DEUX SYSTÈMES DE PILES À COMBUSTIBLE ET UN DISPOSITIF D'ÉQUILIBRAGE DE PRESSION RÉGLABLE EN HAUTEUR ET PROCÉDÉ DE RÉGLAGE DE PRESSION DE LIQUIDE DE REFROIDISSEMENT

(43) Date of publication of application: 28.05.2025
(73) Proprietor: VOLVO TRUCK CORPORATION, 405 08 Göteborg (SE)
(72) Inventor: ARYA, Pranav, 412 85 Göteborg (SE); LEMAITRE, Guillaume, 417 21 Göteborg (SE)
(74) Representative: Ström & Gulliksson AB

(56) References cited:
- CN-A- 105 529 487
- JP-B2- 3 589 221
- US-A1- 2003 022 050
- US-A1- 2011 313 606

## Description

### TECHNICAL FIELD

The disclosure relates generally to fuel cells. In particular aspects, the disclosure relates to a cooling system for fuel cell systems wherein the cooling system comprises a pressure equalization device. The disclosure can for example be applied to fuel cell systems for heavy-duty vehicles, such as trucks, buses, and construction equipment, among other vehicle types.

### BACKGROUND

Fuel cell systems are typically cooled by a coolant in a certain pressure range to avoid internal high pressure differences between the coolant, a cathode gas and an anode gas. High pressure differences may lead to damages and loss of performance or leakages. Prior art solutions are marred with various drawbacks such as complex, bulky and expensive design that require active controlling and regular maintenance.

### SUMMARY

According to a first aspect of the disclosure, there is provided a cooling system for at least two fuel cell systems, the cooling system comprising a single cooling circuit for the fuel cell systems and a pressure equalization device for a coolant of the cooling circuit, wherein the pressure equalization device is adapted to be connected to an exhaust of a single one of the fuel cell systems to increase the pressure of the coolant.

The first aspect of the disclosure may seek to solve the problem of providing a compact, efficient, reliable and cost-effective solution that involves few components. As compared to providing separate cooling systems for a first a second fuel cell system, a technical benefit of the present disclosure may include that less room is required for the single cooling system. Further, assembly may be simplified as only one of the fuel cell system exhausts is connected to the pressure equalization device. The provision of at least two fuel cell systems, instead of one fuel cell system, may be advantageous for reliability or uptime.

Typically, by the connection between the exhaust of the fuel cell system and the pressure equalization device, the coolant pressure will be adapted to the exhaust pressure of the fuel cell system. Thereby, a pressure difference between the coolant and other fluids, typically air and fuel, inside the fuel cells may be reduced. The reduced pressure difference may be beneficial for the fuel cell efficiency and reliability, and in particular the longevity.

Optionally in some examples, including in at least one preferred example, the cooling system comprises a height adjustment assembly for adjusting the height of the pressure equalization device. Thereby, the pressure of the cooling circuit may be adjusted in a simple manner. For example, the pressure of the cooling circuit may be adjusted to suit individual coolant pressure requirements of both the first and second fuel cell systems. The coolant pressure may for example be adjusted to a pressure level between the respective pressure requirement of the first and second fuel cell system. Furthermore, by adjusting the pressure of the coolant by adjusting the height of the pressure equalization device, the pressure equalization device needs not be one of the type that comprises a coolant membrane is similar.

Optionally in some examples, including in at least one preferred example, the height adjustment assembly is manual. Such a solution may be particularly cost-effective, simple to use and implement.

Optionally in some examples, including in at least one preferred example, the height adjustment assembly is configured to allow the pressure equalization device to be positioned at a number of different vertical positions. Such a solution may be particularly beneficial for the usability, e.g. as service technicians or workshop personnel may readily position the pressure equalization device at a certain height. The cooling system may be configured to provide an instruction or a signal that is associated with the appropriate vertical position. For example, the cooling system may cooperate with a separate vehicle control unit, for providing said instruction.

Optionally in some examples, including in at least one preferred example, the height adjustment assembly comprises a number of vertically spaced supports allowing the pressure equalization device to be manually positioned at a corresponding number of different discrete vertical positions. Such as design may be cost-effective and easy to use.

Optionally in some examples, including in at least one preferred example, the height adjustment assembly comprises a guide rail with supports in the form of slots or protrusions, the supports being adapted to hold the pressure equalization device. Such a design may provide for a relatively simple design of the support and the pressure equalization device.

Optionally in some examples, including in at least one preferred example, the number of discrete different vertical positions is 3, 4 or 5, a plausible range being between 3 and 10. Fewer positions may be advantageous for the usability and simplicity of the structural design, whereas a greater number of positions may be advantageous for more precisely adjusting the coolant pressure.

Optionally in some examples, including in at least one preferred example, the pressure equalization device is positioned at same vertical height or higher than the fuel cell systems. Positioning the pressure equalization device at same vertical height as the fuel cell systems may result the pressure equalization device not additionally increasing the pressure of the coolant as a result of gravity, which may be desired in some cases. As is to be apprehended, when the pressure equalization device is positioned vertically higher than the fuel cell systems, the potential energy of the vertically elevated coolant of the pressure equalization device results in an increased coolant pressure within the fuel cell systems. Positioning the pressure equalization device higher than the fuel cell systems may be beneficial in most cases, as it facilitates or enables adjusting the coolant pressure to relatively high pressures of the other fluids that are present inside the fuel cells.

Optionally in some examples, including in at least one preferred example, the cooling system comprises or is connected to a control unit that is able to identify individual coolant pressure requirements of the respective fuel cell system. As mentioned, the cooling system may for example be connected to a vehicle control unit.

Optionally in some examples, including in at least one preferred example, the control unit is configured to, based on the individual coolant pressure requirements, output a signal that is indicative of a suitable height position for the pressure equalization device. The pressure equalization device may then, e.g. by workshop personnel, be positioned at the height position such that the coolant pressure is appropriately adjusted.

According to a second aspect of the disclosure, there is provided a multiple fuel cell system comprising a first fuel cell system, a second fuel cell system and the above described cooling system.

According to a third aspect of the disclosure, there is provided a vehicle comprising at least two fuel cell systems and the above described cooling system. In other words, the vehicle may comprise the multiple fuel cell system. Optionally, the vehicle is a heavy-duty vehicle such as a truck or a bus. Fuel cell systems may be particularly useful in a heavy-duty vehicle to meet the vehicle's energy demand, as pure battery electric heavy-duty vehicles tend to require very large and heavy high voltage batteries. Typically, a heavy-duty vehicle according to the present disclosure comprises the fuel cell systems and a high voltage battery.

According to a fourth aspect of the disclosure, there is provided a method of adjusting a coolant pressure of a single cooling circuit for a first and a second fuel cell system, wherein the cooling circuit is connected to an exhaust of the first fuel cell system but not connected to an exhaust of the second fuel cell system, the method comprising running the fuel cell systems and continuously adjusting the coolant pressure by the cooling circuit being connected to the exhaust of the first fuel cell system. In other words, the pressure of the exhaust affects the pressure of the coolant in the cooling circuit. The cooling circuit may alternatively be connected to the exhaust of the second fuel cell system but not connected to the exhaust of the first fuel cell system.

Optionally in some examples, including in at least one preferred example, a pressure equalization device is connected to the cooling circuit and the method comprises adjusting the coolant pressure by adjusting a height of the pressure equalization device.

Optionally in some examples, including in at least one preferred example, adjusting the coolant pressure by adjusting the height of the pressure equalization device comprises adjusting the coolant pressure on the basis of individual coolant pressure requirements of the first and the second fuel cell systems.

Optionally in some examples, including in at least one preferred example, adjusting the coolant pressure by adjusting the height of the pressure equalization device comprises adjusting, or setting, the coolant pressure to a pressure between the coolant pressure requirement of the first fuel cell system and the coolant pressure requirement of the second fuel cell system. Thus, in this manner, the coolant pressure may be adjusted to a pressure that is appropriate for both the first fuel cell system and the second fuel cell system.

Optionally in some examples, including in at least one preferred example, adjusting the coolant pressure by adjusting the height of the pressure equalization device comprises manually adjusting the height of the pressure equalization device.

Optionally in some examples, including in at least one preferred example, adjusting the coolant pressure by adjusting the height of the pressure equalization device comprises positioning the pressure equalization device in one of a number of discrete height positions.

Optionally in some examples, including in at least one preferred example, the method comprises obtaining from a control unit individual coolant pressure requirements of the first and the second fuel cell systems and on the basis thereof adjusting the coolant pressure by adjusting a height of the pressure equalization device.

Further possible measures of the method, and associated advantages, correspond to those mentioned in connection with the cooling system. The method may be performed in connection with a cooling system described herein, i.e. also in connection with the multiple fuel cell system and the vehicle. The method may be computer-implemented.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary system diagram of a cooling system for at least two fuel cell systems according to an example.
**FIG. 2** is a flow chart of an exemplary method of adjusting a coolant pressure of a single cooling circuit for a first and a second fuel cell system according to an example.

### DETAILED DESCRIPTION

The detailed description set forth below provides information and examples of the disclosed technology with sufficient detail to enable those skilled in the art to practice the disclosure.

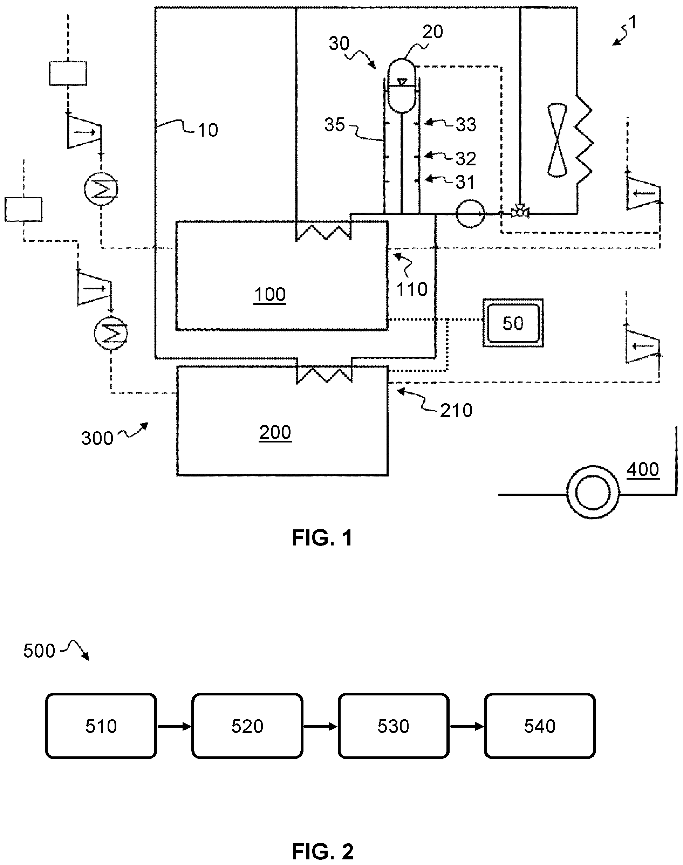

**FIG. 1** shows a cooling system 1 for at least two fuel cell systems 100, 200. Herein, the fuel cell systems 100, 200 are only schematically depicted and not illustrated or described in detail, as the disclosure primarily relates to cooling thereof. As is illustrated, the cooling system 1 comprises a single cooling circuit 10 for the fuel cell systems 100, 200. In other words, one and the same cooling circuit 1 is connected to both fuel cell systems 100, 200. More precisely, the fuel cell systems 100, 200 are connected in parallel. The cooling circuit 10 is illustrated as passing through the fuel cell systems 100, 200 to transfer heat by means of schematically illustrated heat changers. Typically, the cooling circuit 10 passes through undepicted fuel cell stacks of the fuel cell systems 100, 200 to remove or supply heat. The cooling system 1 may comprise a pump, a radiator and a fan as is illustrated to the right in **FIG. 1****.** There may further be provided a three-way valve and a bypass line for fully or partly bypassing the radiator, e.g. during warmup, see **FIG. 1****.** Typically, the coolant pressure is adjusted by adjustment of the pump speed.

In **FIG. 1****,** a solid line (e.g. denoted 10) represents a coolant flow line or cooling circuit. A dashed line represents a cathode supply line and cathode exhaust line, or more generally an air flow line, and a dotted line represents a communication, e.g. a wired or a wireless communication.

As is shown, the cooling system 1 comprises a pressure equalization device 20 for a coolant of the cooling circuit 10. Thus, there may be provided one single pressure equalization device 20. As illustrated, the pressure equalization device 20 is adapted to be connected to an exhaust 110 of a single one of the fuel cell systems 100, 200 to increase the pressure of the coolant. Both fuel cell systems 100, 200 comprise exhausts 110, 210, but only on of theses exhausts is connected to the pressure equalization device 20.

Referring still to see **FIG. 1****,** the present cooling system comprises a height adjustment assembly 30 for adjusting the height of the pressure equalization device 20. The present height adjustment assembly 30 is manual, which means that the height of the pressure equalization device 20 is manually adjustable. For example, the height adjustment assembly 30 may be configured such that workshop personnel may by hand grasp the pressure equalization device 20 and move it upwards or downwards.

As is indicated, the present height adjustment assembly 30 is configured to allow the pressure equalization device 20 to be positioned at a number of different vertical positions, denoted 31, 32 and 33. The height adjustment assembly 30 may be configured such that workshop personnel may by hand grasp the pressure equalization device 20 and move it from one vertical position to another.

The present height adjustment assembly 30 comprises a number of vertically spaced supports 31, 32, 33... allowing the pressure equalization device 20 to be manually positioned at a corresponding number of different discrete vertical positions. In the present example, the height adjustment assembly 30 comprises a guide rail 35 with supports 31, 32, 33 in the form of slots or protrusions, the supports 31, 32, 33 being adapted to hold the pressure equalization device 20. Typically, the height adjustment assembly 30 is configured to hold the pressure equalization device 20 in a form fit. For example, the supports 31, 32, 33 may engage undepicted support receivers on the pressure equalization device 20. Thus, the pressure equalization device 20 may be securely attached to the guide rail 35 by means of the supports 31, 32, 33. Referring to **FIG. 1****,** there may be a first and a second guide rail 35 at least one of which, in the present example both, comprises a number of protruding supports 31, 32, 33 for cooperation with the support receivers. In other examples, the pressure equalization device 20 may comprise protrusions and the guide rail 35 may comprise corresponding receivers. The pressure equalization device 20 may be adapted to be positioned in between the first and a second guide rails 35. The pressure equalization device 20 and the guide rail 35 may be configured such that the pressure equalization device 20 may be secured in a form fit in a selected one out of different discrete vertical positions 31, 32, 33.

In **FIG. 1****,** the pressure equalization device 20 is positioned in a highest position and three possible lower positions are available. Thus, the number of discrete different vertical positions may be four. In other examples, there may be three or five discrete different vertical positions. A suitable range of discrete different vertical is three to ten.

In the lowest position, the pressure equalization device 20 may be positioned at same vertical height as fuel cell systems 100, 200. Typically, in the remaining positions except for the lowest one, the pressure equalization device 20 is positioned vertically higher than the fuel cell systems 100, 200.

**FIG. 1** schematically illustrates a control unit 50 that is able to identify individual coolant pressure requirements of the respective fuel cell system 100, 200. The dotted lines show that the control unit 50 may be in direct communication with the first and second fuel cell systems 100, 200. The present control unit 50 is configured to, based on the individual coolant pressure requirements, output a signal that is indicative of a suitable height position for the pressure equalization device 20. Merely as an example, the first fuel cell system 100 may require, or operate close to its optimum, at a certain first coolant pressure. At the same time, second fuel cell system 200 may require, or operate close to its optimum, at a certain second coolant pressure that is higher than the first coolant pressure. In this situation, the pressure equalization device 20 may be positioned at a height that results in the coolant pressure being between the first coolant pressure and the second coolant pressure, for example approximately equal to an average pressure of the first and second coolant pressure.

Referring to **FIG. 1****,** the first and second fuel cell systems 100, 200 may jointly be referred to as a multiple fuel cell system 300. The first and second fuel cell systems 100, 200 and the cooling system 1 may be arranged in a vehicle 400, typically a heavy-duty vehicle.

As has been mentioned, fuel cell systems 100, 200 typically each comprise undepicted fuel cell stacks. These typically comprise bipolar plates, electrical connections, inputs and outputs for cathode gas (typically air) and anode gas (such as hydrogen). The bipolar plates may be particularly susceptible to damages as a result of insufficient coolant pressure adjustment. In **FIG. 1****,** the dashed lines illustrate the cathode gas flow to and from the fuel cell systems 100, 200. To the left, cathode gas, in this case ambient air, enters into a respective air intake of the fuel cell systems 100, 200. Air filters are arranged downstream the respective air intakes. In undepicted embodiment, both fuel cell systems 100, 200 may comprise a common air intake. Next, the air passes through respective blowers or compressors, before passing through respective optional supply air coolers and entering into the respective fuel cell systems 100, 200. Inside the fuel cell systems 100, 200, the air reacts with the fuel to create electric energy, used e.g. to propel the heavy-duty vehicle 400. The air then exits the fuel cell systems 100, 200 through the first fuel cell system first air exhaust 110 and the second fuel cell system first air exhaust 210, respectively. As is shown, first and second turbines may be arranged to harvest energy from the first and second fuel cell system air exhausts 110, 210. The first air exhaust 110 is connected to the pressure equalization device 20. More precisely, an air flow line extends from between first air exhaust 110 and the first turbine to pressure equalization device 20. In an undepicted embodiment, the second air exhaust 210 may instead be connected to the pressure equalization device 20. There may be undepicted coolant lines connecting the supply air coolers to the cooling circuit 10.

Again, the pressure equalization device 20 is adapted to be connected to an exhaust 110 of a single one of the fuel cell systems 100, 200 to increase the pressure of the coolant. More precisely, the coolant pressure is adjusted by means of the connection of the pressure equalization device 20 to the exhaust 110. As is shown in **FIG. 1****,** the pressure equalization device 20 may comprise a first, here upper, port for connection to the exhaust 110 and a second, here lower, port for connection to the cooling circuit 10. The first port may be referred to as a cathode gas port and the second port may be referred to as a coolant port. Typically, an upper portion of the pressure equalization device 20 contains cathode gas and a lower portion of the pressure equalization device 20 contains coolant, which is typically liquid. The coolant level is indicated in **FIG. 1****.** A separator or membrane that separates the coolant from the cathode gas is also illustrated. The membrane may be liquid tight or fluid tight. In undepicted embodiments, the coolant membrane may be dispensed with such that the coolant is in contact with the cathode gas.

A method 500 of adjusting a coolant pressure of a single cooling circuit 10 for a first and a second fuel cell system 100, 200 is next described with reference to **FIG. 2****.** The method may for example be applied to the herein described fuel cell systems 100, 200 and cooling system 1 and to simplify understanding the method is described also with reference to the example of **FIG. 1****.** Thus, the cooling circuit 10 is connected to the exhaust 110 of the first fuel cell system 100 but not connected to the exhaust 210 of the second fuel cell system 200.

The method 500 comprises running 510 the first and second fuel cell systems 100, 200, and meanwhile continuously adjusting 520 the coolant pressure by the cooling circuit 10 being connected to the exhaust 110 of the first fuel cell system 100. Typically, although not described in detail herein, the coolant pressure is additionally adjusted by adjusting the speed of the coolant pump.

As has been described, the pressure equalization device 20 is connected to the cooling circuit 10 and the method 500 may thus comprise adjusting 540 the coolant pressure by adjusting a height of the pressure equalization device 20. Thus, the coolant pressure may be adjusted in three separate ways, firstly by the coolant pump speed, secondly by the connection the exhaust 110 and thirdly by the height of the pressure equalization device 20 being adjusted. The adjustment of the coolant pressure by the connection the exhaust 110, any by the coolant pump speed adjustment, may be referred to as an automatic or continuous coolant pressure adjustment 520. The adjustment of the coolant pressure by adjusting the height of the pressure equalization device 20 may be referred to as a manual, discontinuous or intermittent coolant pressure adjustment 540.

As has been described, adjusting 540 the coolant pressure by adjusting the height of the pressure equalization device 20 may comprise adjusting the coolant pressure on the basis of individual coolant pressure requirements of the first and the second fuel cell systems 100, 200. In more detail, adjusting 540 the coolant pressure by adjusting the height of the pressure equalization device 20 may comprise adjusting or setting the coolant pressure between the coolant pressure requirement of the first fuel cell system 100 and the coolant pressure requirement of the second fuel cell system 200.

As has been described, adjusting 540 the coolant pressure by adjusting the height of the pressure equalization device 20 may comprises manually adjusting the height of the pressure equalization device 20. Adjusting 540 the coolant pressure by adjusting the height of the pressure equalization device 20 may comprise positioning the pressure equalization device 20 in one of a number of discrete height positions.

The method may further comprise, referring again to the descripting of the example of **FIG. 1****,** obtaining 530, from the control unit 50, individual coolant pressure requirements of the first and the second fuel cell systems 100, 200 and on the basis thereof adjusting 540 the coolant pressure by adjusting a height of the pressure equalization device 20. Different coolant pressure requirements of the first and the second fuel cell systems 100, 200 may be caused by variation in performance and/or state of health. Typically, the coolant pressure requirement of a fuel cell system may increase with load. Higher load results in higher exhaust pressure and thus, in accordance with the present disclosure, higher coolant pressure (since the pressure equalization device 20 connected to the exhaust 110). Now, the first fuel cell system 100 may have a first pressure corridor, meaning acceptable lower and higher coolant pressures for each load point. Similarly, the second fuel cell system 200 may have a second pressure corridor, which may differ from the first pressure corridor e.g. because of a variation in state of health between the fuel cell systems 100, 200. By adjusting the height of the pressure equalization device 20, the coolant pressure may be adjusted to be within both the first and the second pressure corridors.

Also disclosed are examples according to the following clauses:
1. A cooling system (1) for at least two fuel cell systems (100, 200), the cooling system (1) comprising
   - a single cooling circuit (10) for the fuel cell systems (100, 200) and
   - a pressure equalization device (20) for a coolant of the cooling circuit (10), wherein the pressure equalization device (20) is adapted to be connected to an exhaust (110) of a single one of the fuel cell systems (100, 200) to increase the pressure of the coolant.
2. The cooling system (1) of clause 1, comprising a height adjustment assembly (30) for adjusting the height of the pressure equalization device (20).
3. The cooling system (1) of clause 2, wherein the height adjustment assembly (30) is manual.
4. The cooling system (1) of clause 2 or 3, wherein the height adjustment assembly (30) is configured to allow the pressure equalization device (20) to be positioned at a number of different vertical positions.
5. The cooling system (1) of clause 4, wherein the height adjustment assembly (30) comprises a number of vertically spaced supports (31, 32, 33...) allowing the pressure equalization device (20) to be manually positioned at a corresponding number of different discrete vertical positions.
6. The cooling system (1) of clause 5, wherein the height adjustment assembly (30) comprises a guide rail (35) with supports (31, 32, 33...) in the form of slots or protrusions, the supports (31, 32, 33...) being adapted to hold the pressure equalization device (20).
7. The cooling system (1) according to any of clauses 4 to 6, wherein the number of discrete different vertical positions is between 3 and 10.
8. The cooling system (1) according to any of clauses 4 to 6, wherein the number of discrete different vertical positions is 3, 4 or 5.
9. The cooling system (1) of any preceding clause, wherein the pressure equalization device (20) is positioned at same vertical height or higher than the fuel cell systems (100, 200).
10. The cooling system (1) of any preceding clause, comprising or connected to a control unit (50) that is able to identify individual coolant pressure requirements of the respective fuel cell system (100, 200).
11. The cooling system (1) of clause 10, wherein the control unit (50) is configured to, based on the individual coolant pressure requirements, output a signal that is indicative of a suitable height position for the pressure equalization device (20).
12. A multiple fuel cell system (300) comprising a first fuel cell system (100), a second fuel cell system (200) and the cooling system (1) of any preceding clause.
13. A vehicle (400) comprising at least two fuel cell systems (100, 200) and the cooling system (1) according to any of clauses 1 to 11.
14. A method (500) of adjusting a coolant pressure of a single cooling circuit (10) for a first and a second fuel cell system (100, 200), wherein the cooling circuit (10) is connected to an exhaust (110) of the first fuel cell system (100) but not connected to an exhaust (210) of the second fuel cell system (200), the method (500) comprising
   - running (510) the fuel cell systems (100, 200) and
   - continuously adjusting (520) the coolant pressure by the cooling circuit (10) being connected to the exhaust (110) of the first fuel cell system (100).
15. The method (500) of clause 14, wherein a pressure equalization device (20) is connected to the cooling circuit (10) and the method (500) comprises adjusting (540) the coolant pressure by adjusting a height of the pressure equalization device (20).
16. The method (500) of clause 15, wherein adjusting (540) the coolant pressure by adjusting the height of the pressure equalization device (20) comprises adjusting the coolant pressure on the basis of individual coolant pressure requirements of the first and the second fuel cell systems (100, 200).
17. The method (500) of clause 16, wherein adjusting (540) the coolant pressure by adjusting the height of the pressure equalization device (20) comprises setting the coolant pressure between the coolant pressure requirement of the first fuel cell system (100) and the coolant pressure requirement of the second fuel cell system (200).
18. The method (500) according to any of clauses 15 to 17, wherein adjusting (540) the coolant pressure by adjusting the height of the pressure equalization device (20) comprises manually adjusting the height of the pressure equalization device (20).
19. The method (500) according to any of clauses 15 to 18, wherein adjusting (540) the coolant pressure by adjusting the height of the pressure equalization device (20) comprises positioning the pressure equalization device (20) in one of a number of discrete height positions.
20. The method (500) according to any of clauses 14 to 19, comprising obtaining (530) from a control unit (50) individual coolant pressure requirements of the first and the second fuel cell systems (100, 200) and on the basis thereof adjusting (540) the coolant pressure by adjusting a height of the pressure equalization device (20).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cooling system (1) for at least two fuel cell systems (100, 200), the cooling system (1) comprising
- a single cooling circuit (10) for the fuel cell systems (100, 200) and
- a pressure equalization device (20) for a coolant of the cooling circuit (10), wherein the pressure equalization device (20) is adapted to be connected to an exhaust (110) of a single one of the fuel cell systems (100, 200) to increase the pressure of the coolant.

2. The cooling system (1) of claim 1, comprising a height adjustment assembly (30) for adjusting the height of the pressure equalization device (20).

3. The cooling system (1) of claim 2, wherein the height adjustment assembly (30) is manual.

4. The cooling system (1) of claim 2 or 3, wherein the height adjustment assembly (30) is configured to allow the pressure equalization device (20) to be positioned at a number of different vertical positions.

5. The cooling system (1) of claim 4, wherein the height adjustment assembly (30) comprises a number of vertically spaced supports (31, 32, 33...) allowing the pressure equalization device (20) to be manually positioned at a corresponding number of different discrete vertical positions.

6. The cooling system (1) of claim 5, wherein the height adjustment assembly (30) comprises a guide rail (35) with supports (31, 32, 33...) in the form of slots or protrusions, the supports (31, 32, 33...) being adapted to hold the pressure equalization device (20).

7. The cooling system (1) according to any of claims 4 to 6, wherein the number of discrete different vertical positions is between 3 and 10, such as 3, 4 or 5 positions.

8. The cooling system (1) of any preceding claim, comprising or connected to a control unit (50) that is able to identify individual coolant pressure requirements of the respective fuel cell system (100, 200), wherein the control unit (50) is configured to, based on the individual coolant pressure requirements, output a signal that is indicative of a suitable height position for the pressure equalization device (20).

9. A multiple fuel cell system (300) comprising a first fuel cell system (100), a second fuel cell system (200) and the cooling system (1) of any preceding claim.

10. A vehicle (400) comprising at least two fuel cell systems (100, 200) and the cooling system (1) according to any of claims 1 to 8.

11. A method (500) of adjusting a coolant pressure of a single cooling circuit (10) for a first and a second fuel cell system (100, 200), wherein the cooling circuit (10) is connected to an exhaust (110) of the first fuel cell system (100) but not connected to an exhaust (210) of the second fuel cell system (200), the method (500) comprising
- running (510) the fuel cell systems (100, 200) and
- continuously adjusting (520) the coolant pressure by the cooling circuit (10) being connected to the exhaust (110) of the first fuel cell system (100).

12. The method (500) of claim 11, wherein a pressure equalization device (20) is connected to the cooling circuit (10) and the method (500) comprises adjusting (540) the coolant pressure by adjusting a height of the pressure equalization device (20).

13. The method (500) of claim 12, wherein adjusting (540) the coolant pressure by adjusting the height of the pressure equalization device (20) comprises adjusting the coolant pressure on the basis of individual coolant pressure requirements of the first and the second fuel cell systems (100, 200), wherein adjusting (540) the coolant pressure by adjusting the height of the pressure equalization device (20) comprises setting the coolant pressure between the coolant pressure requirement of the first fuel cell system (100) and the coolant pressure requirement of the second fuel cell system (200).

14. The method (500) according to any of claims 11 to 13, wherein adjusting (540) the coolant pressure by adjusting the height of the pressure equalization device (20) comprises manually adjusting the height of the pressure equalization device (20).

15. The method (500) according to any of claims 11 to 14, comprising obtaining (530) from a control unit (50) individual coolant pressure requirements of the first and the second fuel cell systems (100, 200) and on the basis thereof adjusting (540) the coolant pressure by adjusting a height of the pressure equalization device (20).

## Patentansprüche

1. Kühlsystem (1) für mindestens zwei Brennstoffzellensysteme (100, 200), das Kühlsystem (1) umfassend
- einen einzelnen Kühlkreislauf (10) für die Brennstoffzellensysteme (100, 200) und
- eine Druckausgleichsvorrichtung (20) für ein Kühlmittel des Kühlkreislaufs (10), wobei die Druckausgleichsvorrichtung (20) angepasst ist, um mit einem Auslass (110) eines einzelnen der Brennstoffzellensysteme (100, 200) verbunden zu sein, um den Druck des Kühlmittels zu erhöhen.

2. Kühlsystem (1) nach Anspruch 1, umfassend eine Höheneinstellvorrichtung (30) zum Einstellen der Höhe der Druckausgleichsvorrichtung (20).

3. Kühlsystem (1) nach Anspruch 2, wobei die Höheneinstellvorrichtung (30) manuell ist.

4. Kühlsystem (1) nach Anspruch 2 oder 3, wobei die Höheneinstellanordnung (30) konfiguriert ist, um zu ermöglichen, dass die Druckausgleichsvorrichtung (20) in einer Reihe von verschiedenen vertikalen Positionen positioniert zu werden.

5. Kühlsystem (1) nach Anspruch 4, wobei die Höheneinstellanordnung (30) eine Anzahl von vertikal beabstandeten Halterungen (31, 32, 33 ...) umfasst, die es ermöglichen, die Druckausgleichsvorrichtung (20) manuell in einer entsprechenden Anzahl von verschiedenen diskreten vertikalen Positionen zu positionieren.

6. Kühlsystem (1) nach Anspruch 5, wobei die Höheneinstellvorrichtung (30) eine Führungsschiene (35) mit Halterungen (31, 32, 33...) in Form von Schlitzen oder Vorsprüngen umfasst, wobei die Halterungen (31, 32, 33...) angepasst sind, um die Druckausgleichsvorrichtung (20) zu halten.

7. Kühlsystem (1) nach einem der Ansprüche 4 bis 6, wobei die Anzahl der separaten verschiedenen vertikalen Positionen zwischen 3 und 10 ist, wie beispielsweise 3, 4 oder 5 Positionen.

8. Kühlsystem (1) nach einem der vorherigen Ansprüche, umfassend oder verbunden mit einer Steuereinheit (50), die in der Lage ist, individuelle Kühlmitteldruckanforderungen des jeweiligen Brennstoffzellensystems (100, 200) zu identifizieren, wobei die Steuereinheit (50) konfiguriert ist, um basierend auf den individuellen Kühlmitteldruckanforderungen ein Signal auszugeben, das eine geeignete Höhenposition für die Druckausgleichsvorrichtung (20) angibt.

9. Mehrfach-Brennstoffzellensystem (300), umfassend ein erstes Brennstoffzellensystem (100), ein zweites Brennstoffzellensystem (200) und das Kühlsystem (1) nach einem der vorherigen Ansprüche.

10. Fahrzeug (400), umfassend mindestens zwei Brennstoffzellensysteme (100, 200) und das Kühlsystem (1) nach einem der Ansprüche 1 bis 8.

11. Verfahren (500) zum Einstellen eines Kühlmitteldrucks eines einzelnen Kühlkreislaufs (10) für ein erstes und ein zweites Brennstoffzellensystem (100, 200), wobei der Kühlkreislauf (10) mit einem Auslass (110) des ersten Brennstoffzellensystems (100) verbunden ist, aber nicht mit einem Auslass (210) des zweiten Brennstoffzellensystems (200) verbunden ist, das Verfahren (500) umfassend
- Betreiben (510) der Brennstoffzellensysteme (100, 200), und
- kontinuierliches Einstellen (520) des Kühlmitteldrucks durch den Kühlkreislauf (10), der mit dem Auslass (110) des ersten Brennstoffzellensystems (100) verbunden ist.

12. Verfahren (500) nach Anspruch 11, wobei eine Druckausgleichsvorrichtung (20) mit dem Kühlkreislauf (10) verbunden ist und das Verfahren (500) ein Einstellen (540) des Kühlmitteldrucks durch Einstellen einer Höhe der Druckausgleichsvorrichtung (20) umfasst.

13. Verfahren (500) nach Anspruch 12, wobei das Einstellen (540) des Kühlmitteldrucks durch Einstellen der Höhe der Druckausgleichsvorrichtung (20) ein Einstellen des Kühlmitteldrucks basierend auf den individuellen Kühlmitteldruckanforderungen des ersten und des zweiten Brennstoffzellensystems (100, 200) umfasst, wobei ein Einstellen (540) des Kühlmitteldrucks durch Einstellen der Höhe der Druckausgleichsvorrichtung (20) ein Einstellen des Kühlmitteldrucks zwischen der Kühlmitteldruckanforderung des ersten Brennstoffzellensystems (100) und der Kühlmitteldruckanforderung des zweiten Brennstoffzellensystems (200) umfasst.

14. Verfahren (500) nach einem der Ansprüche 11 bis 13, wobei das Einstellen (540) des Kühlmitteldrucks durch Einstellen der Höhe der Druckausgleichsvorrichtung (20) ein manuelles Einstellen der Höhe der Druckausgleichsvorrichtung (20) umfasst.

15. Verfahren (500) nach einem der Ansprüche 11 bis 14, umfassend ein Erlangen (530), von einer Steuereinheit (50), von individuellen Kühlmitteldruckanforderungen des ersten und des zweiten Brennstoffzellensystems (100, 200) und auf deren Basis ein Einstellen (540) des Kühlmitteldrucks durch Einstellen einer Höhe der Druckausgleichsvorrichtung (20).

## Revendications

1. Système de refroidissement (1) pour au moins deux systèmes de pile à combustible (100, 200), le système de refroidissement (1) comprenant
- un seul circuit de refroidissement (10) pour les systèmes de pile à combustible (100, 200) et
- un dispositif d'égalisation de pression (20) pour un liquide de refroidissement du circuit de refroidissement (10), dans lequel le dispositif d'égalisation de pression (20) est adapté pour être connecté à un échappement (110) d'un seul des systèmes de pile à combustible (100, 200) afin d'augmenter la pression du liquide de refroidissement.

2. Système de refroidissement (1) selon la revendication 1, comprenant un ensemble de réglage de la hauteur (30) pour régler la hauteur du dispositif d'égalisation de pression (20).

3. Système de refroidissement (1) selon la revendication 2, dans lequel l'ensemble de réglage de la hauteur (30) est manuel.

4. Système de refroidissement (1) selon la revendication 2 ou 3, dans lequel l'ensemble de réglage de la hauteur (30) est configuré pour permettre au dispositif d'égalisation de pression (20) d'être positionné à un certain nombre de positions verticales différentes.

5. Système de refroidissement (1) selon la revendication 4, dans lequel l'ensemble de réglage de la hauteur (30) comprend un certain nombre de supports espacés verticalement (31, 32, 33...) permettant au dispositif d'égalisation de pression (20) d'être positionné manuellement à un nombre correspondant de différentes positions verticales distinctes.

6. Système de refroidissement (1) selon la revendication 5, dans lequel l'ensemble de réglage de la hauteur (30) comprend un rail de guidage (35) avec des supports (31, 32, 33...) sous forme de fentes ou de saillies, les supports (31, 32, 33...) étant adaptés pour maintenir le dispositif d'égalisation de pression (20).

7. Système de refroidissement (1) selon l'une quelconque des revendications 4 à 6, dans lequel le nombre de différentes positions verticales distinctes est compris entre 3 et 10, par exemple 3, 4 ou 5 positions.

8. Système de refroidissement (1) selon l'une quelconque des revendications précédentes, comprenant ou connecté à une unité de commande (50) qui est capable d'identifier les exigences individuelles de pression de liquide de refroidissement du système de pile à combustible (100, 200) respectif, dans lequel l'unité de commande (50) est configurée pour, sur la base des exigences individuelles de pression de liquide de refroidissement, émettre un signal qui indique une position en hauteur appropriée pour le dispositif d'égalisation de pression (20).

9. Système de pile à combustible multiples (300) comprenant un premier système de pile à combustible (100), un second système de pile à combustible (200) et le système de refroidissement (1) selon l'une quelconque des revendications précédentes.

10. Véhicule (400) comprenant au moins deux systèmes de pile à combustible (100, 200) et le système de refroidissement (1) selon l'une des revendications 1 à 8.

11. Procédé (500) de réglage d'une pression de liquide de refroidissement d'un seul circuit de refroidissement (10) pour un premier et un second système de pile à combustible (100, 200), dans lequel le circuit de refroidissement (10) est relié à un échappement (110) du premier système de pile à combustible (100), mais n'est pas relié à un échappement (210) du second système de pile à combustible (200), le procédé (500) comprenant
- l'utilisation (510) des systèmes de pile à combustible (100, 200) et
- le réglage en continu (520) de la pression de liquide de refroidissement par le circuit de refroidissement (10) étant relié à l'échappement (110) du premier système de pile à combustible (100).

12. Procédé (500) selon la revendication 11, dans lequel un dispositif d'égalisation de pression (20) est connecté au circuit de refroidissement (10) et le procédé (500) comprend le réglage (540) de la pression de liquide de refroidissement en réglant une hauteur du dispositif d'égalisation de pression (20).

13. Procédé (500) selon la revendication 12, dans lequel le réglage (540) de la pression de liquide de refroidissement par le réglage de la hauteur du dispositif d'égalisation de pression (20) comprend le réglage de la pression de liquide de refroidissement sur la base des exigences individuelles de pression de liquide de refroidissement du premier et du second systèmes de piles à combustible (100, 200), dans lequel le réglage (540) de la pression de liquide de refroidissement par le réglage de la hauteur du dispositif d'égalisation de pression (20) comprend le réglage de la pression de liquide de refroidissement entre l'exigence de pression de liquide de refroidissement du premier système de pile à combustible (100) et l'exigence de pression de liquide de refroidissement du second système de pile à combustible (200).

14. Procédé (500) selon l'une quelconque des revendications 11 à 13, dans lequel le réglage (540) de la pression de liquide de refroidissement par le réglage de la hauteur du dispositif d'égalisation de pression (20) comprend le réglage manuel de la hauteur du dispositif d'égalisation de pression (20).

15. Procédé (500) selon l'une quelconque des revendications 11 à 14, comprenant l'obtention (530) d'une unité de commande (50) des exigences individuelles de pression de liquide de refroidissement du premier et du second système de pile à combustible (100, 200) et, sur cette base, le réglage (540) de la pression de liquide de refroidissement en réglant une hauteur du dispositif d'égalisation de pression (20).
